(19) Europäisches Patentamt
European Patent Office
Office européen des brevets

(11) EP 2 158 226 B1

(12) **EUROPÄISCHE PATENTSCHRIFT**

(45) Veröffentlichungstag und Bekanntmachung des Hinweises auf die Patenterteilung:
**12.09.2012 Patentblatt 2012/37**

(21) Anmeldenummer: **08760726.3**

(22) Anmeldetag: **09.06.2008**

(51) Int Cl.:
***C08F 2/22*** (2006.01) ***C08F 265/00*** (2006.01)
***C08F 265/04*** (2006.01) ***C08F 265/06*** (2006.01)
***C08F 265/10*** (2006.01) ***C09D 151/00*** (2006.01)
***C09J 151/00*** (2006.01) ***C08L 51/00*** (2006.01)

(86) Internationale Anmeldenummer:
**PCT/EP2008/057161**

(87) Internationale Veröffentlichungsnummer:
**WO 2008/152017 (18.12.2008 Gazette 2008/51)**

(54) **VERWENDUNG WÄSSRIGER POLYMERISATDISPERSIONEN**

USE OF AQUEOUS POLYMERISATE DISPERSIONS

UTILISATION DE DISPERSIONS AQUEUSE DE POLYMÈRE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **11.06.2007 EP 07109999**

(43) Veröffentlichungstag der Anmeldung:
**03.03.2010 Patentblatt 2010/09**

(73) Patentinhaber: **BASF SE**
**67056 Ludwigshafen (DE)**

(72) Erfinder:
- **BALK, Roelof**
  **67459 Böhl-Iggelheim (DE)**
- **TIARKS, Franca**
  **Shanghai, Pudong 200122 (CN)**

(56) Entgegenhaltungen:
**DE-A1- 10 335 958** **DE-A1-102005 023 806**
**US-A- 5 468 799**

EP 2 158 226 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Gegenstand der vorliegenden Erfindung ist die Verwendung einer wässrigen Polymerisatdispersion mit enger Teilchengrößenverteilung und gewichtsmittlerem Teilchendurchmesser ≤ 100 nm, wobei unter enger Teilchengrößenverteilung verstanden werden soll, wenn das Verhältnis der nach der Methode der Analytischen Ultrazentrifuge ermittelten gewichtsmittleren Teilchendurchmesser $D_{W50}$ und zahlenmittleren Teilchendurchmesser $D_{N50}$ ≤ 2,0 ist, hergestellt durch radikalisch initiierte wässrige Emulsionspolymerisation von ethylenisch ungesättigten Monomeren in Anwesenheit wenigstens eines Dispergiermittels und wenigstens eines Radikalinitiators, wobei zur Emulsionspolymerisation

| | |
|---|---|
| 0,1 bis 10 Gew.-% | wenigstens eines ethylenisch ungesättigten Monomeren mit einer Löslichkeit ≥ 200 g pro 1000 g entionisiertem Wasser bei 20 °C und 1 atm (absolut) [Monomer A], und |
| 90 bis 99,9 Gew.-% | wenigstens eines ethylenisch ungesättigten Monomeren mit einer Löslichkeit ≤ 100 g pro 1000 g entionisiertem Wasser bei 20 °C und 1 atm (absolut) [Monomer B] |
| eingesetzt werden und sich die Monomeren A und B zu 100 Gew.-% | addieren, wobei in einem wässrigen Polymerisationsmedium zuerst lediglich |
| 0,1 bis 10 Gew.-% | der Gesamtmenge des wenigstens einen Monomeren B vorgelegt und polymerisiert werden (Polymerisationsstufe 1) |

und daran anschließend die Gesamtmenge des wenigstens einen Monomeren A sowie die Restmenge des wenigstens einen Monomeren B dem wässrigen Polymerisationsmedium unter Polymerisationsbedingungen zugegeben und polymerisiert werden (Polymerisationsstufe 2), als Bindemittel in transparenten wässrigen Formulierungen für Holzbeschichtungen.

Wässrige Polymerisatdispersionen sind allgemein bekannt. Es handelt sich dabei um fluide Systeme, die als disperse Phase in wässrigem Dispergiermedium aus mehreren ineinander verschlungenen Polymerisatketten bestehenden Polymerisatknäuel, die sogenannte Polymermatrix oder Polymerisatpartikel, in disperser Verteilung befindlich enthalten. Der mittlere Durchmesser der Polymerisatpartikel liegt häufig im Bereich von 10 bis 1000 nm, insbesondere im Bereich von 50 bis 600 nm. Wässrige Polymerisatdispersionen werden in einer Vielzahl von technischen Anwendungen als Bindemittel eingesetzt.

Die Durchführung von radikalisch initiierten Emulsionspolymerisationen von ethylenisch ungesättigten Monomeren in einem wässrigen Medium ist vielfach vorbeschrieben und dem Fachmann daher hinreichend bekannt [vgl. hierzu Emulsionspolymerisation in Encyclopedia of Polymer Science and Engineering, Vol. 8, Seiten 659 ff. (1987); D.C. Blackley, in High Polymer Latices, Vol. 1, Seiten 35 ff. (1966); H. Warson, The Applications of Synthetic Resin Emulsions, Kapitel 5, Seiten 246 ff. (1972); D. Diederich, Chemie in unserer Zeit 24, Seiten 135 bis 142 (1990); Emulsion Polymerisation, Interscience Publishers, New York (1965); DE-A 40 03 422 und Dispersionen synthetischer Hochpolymerer, F. Hölscher, Springer-Verlag, Berlin (1969)]. Die radikalisch initiierten wässrigen Emulsionspolymerisationsreaktionen erfolgen üblicherweise dergestalt, dass man die ethylenisch ungesättigten Monomere unter Mitverwendung von Dispergiermitteln, im wässrigen Medium in Form von Monomerentröpfchen dispers verteilt und mittels eines radikalischen Polymerisationsinitiators polymerisiert.

Soll die Teilchengröße der mittels der radikalisch initiierten wässrigen Emulsionspolymerisation herzustellenden Polymerisatteilchen gezielt eingestellt werden, so wird in der Regel eine sogenannte Polymersaat eingesetzt, welche entweder vorher mit anderen Monomeren separat hergestellt wurde (Polymerfremdsaat) oder welche durch Teilpolymerisation der zu polymerisierenden Monomere "in situ" erzeugt wurden.

Die Herstellung einer wässrigen Polymerisatdispersion unter Verwendung einer in situ-Polymersaat ist dem Fachmann geläufig (siehe beispielsweise DE-A 196 09 509, EP-A 690882, EP-A 710 680, EP-A 1 125 949, EP-A 1 294 816, EP-A 1 614 732, WO-A 03/29300) und erfolgt in der Regel dergestalt, dass vorab der eigentlichen Emulsionspolymerisation eine kleine Teilmenge des zur Emulsionspolymerisation eingesetzten Monomerengemisches im wässrigen Polymerisationsmedium vorgelegt und in Anwesenheit einer großen Emulgatormenge radikalisch polymerisiert wird.

Die Verwendung einer in situ-Polymersat erweist sich jedoch immer dann hinsichtlich einer engen Teilchengrößenverteilung als nachteilig, wenn das zur Emulsionspolymerisation eingesetzte Monomerengemisch auch gut wasserlösliche Monomere enthält.

Aufgabe der vorliegenden Erfindung war es, die Verwendung einer wässrigen Polymerisatdispersion zur Verfügung zu stellen, welche auf Holzoberflächen sowohl im feuchten wie auch im trockenen Zustand eine exzellente Farbtiefe und Farbbrillanz aufweist.

Überraschender Weise wurde die Aufgabe durch die eingangs definierte Verwendung gelöst.

Zur Herstellung der erfindungsgemäß verwendeten wässrigen Polymerisatdispersion wird klares Wasser, bevorzugt Trinkwasser und insbesondere bevorzugt entionisiertes Wasser verwendet, dessen Gesamtmenge so bemessen wird, dass sie 30 bis 90 Gew.-% und vorteilhaft 40 bis 60 Gew.-%, jeweils bezogen auf die wässrige Polymerisatdispersion, beträgt. Wesentlich ist, dass in Polymerisationsstufe 1 wenigstens eine Teilmenge, vorteilhaft ≥ 25 Gew.-% und insbesondere vorteilhaft ≥ 35 Gew.-% der Gesamtmenge an Wasser als Bestandteil des wässrigen Polymerisationsmediums im Polymerisationsgefäß gemeinsam mit den Monomeren B vorgelegt wird. Die gegebenenfalls verbliebene Restmenge an Wasser kann dem Polymerisationsmedium diskontinuierlich in einer oder mehreren Portionen oder kontinuierlich mit gleichbleibenden oder sich ändernden Mengenströmen, insbesondere als Bestandteil einer wässrigen Monomerenemulsion in Polymerisationsstufe 2 zugeführt werden.

Als Monomere A kommen alle diejenigen ethylenisch ungesättigten Monomere in Betracht, die bei 20 °C und 1 atm (absolut) eine Löslichkeit ≥ 200 g, bevorzugt ≥ 300 g und insbesondere bevorzugt ≥ 500 g pro 1000 g entionisiertem Wasser aufweisen. Häufig weisen die Monomeren A eine unbegrenzte Löslichkeit mit entionisiertem Wasser auf. Als Monomere A kommen insbesondere solche ethylenisch ungesättigten Monomere in Betracht, welche wenigstens eine Säuregruppe, insbesondere eine Carbonsäure- oder Sulfonsäuregruppe, eine Hydroxyalkylgruppe, eine Amidgruppe, eine Ethylenharnstoffgruppe, eine Acetoacetoxygruppe aufweisen. Mit besonderem Vorteil sind die Monomeren A ausgewählt aus der Gruppe umfassend Acrylsäure, Methacrylsäure, 2-Acrylamido-2-methylpropansulfonsäure (AMPS), Vinylsulfonsäure, Acrylamid, Methacrylamid, N-(2-Methacryloyloxyethyl)ethylenharnstoff (UMA), N-(2-Acryloyloxyethyl) ethylenhamstoff, 2-Acetoacetoxyethylacrylat, 2-Acetoacetoxyethylmethacrylat (AAEM), Diacetonacrylamid (DAAM), 2-Hydroxyethylacrylat, Hydroxypropylacrylat, 2-Hydroxyethylmethacrylat und Hydroxypropylmethacrylat. Insbesondere bevorzugt sind Acrylsäure, Methacrylsäure, Acrylamid und/oder AMPS. Selbstverständlich umfassen die Monomeren A auch die Alkalimetal - oder Ammoniumsalze der vorgenannten Monomeren mit einer Säure-, insbesondere einer Carbon- oder Sulfonsäuregruppe.

Als Monomere B kommen alle diejenigen ethylenisch ungesättigten Monomere in Betracht, die bei 20 °C und 1 atm (absolut) eine Löslichkeit ≤ 100 g, bevorzugt ≤ 60 g und insbesondere bevorzugt ≤ 20 g pro 1000 g entionisiertem Wasser aufweisen.

Als Monomere B kommen insbesondere in einfacher Weise mit den Monomeren A radikalisch copolymerisierbare ethylenisch ungesättigte Verbindungen in Betracht, wie beispielsweise Olefine, wie Ethylen oder Propylen, vinylaromatische Monomere, wie Styrol, α-Methylstyrol, o-Chlorstyrol oder Vinyltoluol, Vinylhalogenide, wie Vinylchlorid oder Vinylidenchlorid, Ester aus Vinylalkohol und 1 bis 18 C-Atome aufweisenden Monocarbonsäuren, wie Vinylacetat, Vinylpropionat, Vinyl-n-butyrat, Vinyllaurat und Vinylstearat, Ester aus vorzugsweise 3 bis 6 C-Atome aufweisenden α,β-monoethylenisch ungesättigten Mono- und Dicarbonsäuren, wie insbesondere Acrylsäure, Methacrylsäure, Maleinsäure, Fumarsäure und Itaconsäure, mit im allgemeinen 1 bis 12, vorzugsweise 1 bis 8 und insbesondere 1 bis 4 C-Atome aufweisenden Alkanolen, wie besonders Acrylsäure- und Methacrylsäuremethyl-, -ethyl-, -n-butyl-, -isobutyl-, pentyl-, -hexyl-, -heptyl-, -octyl-, -nonyl-, -decyl- und -2-ethylhexylester, Fumar- und Maleinsäuredimethylester oder -di-n-butylester, Nitrile α,β-monoethylenisch ungesättigter Carbonsäuren, wie Acrylnitril, Methacrylnitril, Fumarsäuredinitril, Maleinsäuredinitril sowie $C_{4-8}$-konjugierte Diene, wie 1,3-Butadien (Butadien) und Isopren. Die genannten Monomere bilden in der Regel die Hauptmonomeren, die, bezogen auf die Gesamtmenge an Monomeren B, einen Anteil von ≥ 80 Gew.-%, bevorzugt ≥ 90 Gew.-% und insbesondere bevorzugt ≥ 95 Gew.-% auf sich vereinen oder sogar die Gesamtmenge der Monomeren B bilden.

Monomere B, die üblicherweise die innere Festigkeit der Vefilmungen einer Polymermatrix erhöhen, weisen normalerweise wenigstens eine Epoxygruppe oder wenigstens zwei nicht konjugierte ethylenisch ungesättigte Doppelbindungen auf. Beispiele hierfür sind zwei Vinylreste aufweisende Monomere, zwei Vinylidenreste aufweisende Monomere sowie zwei Alkenylreste aufweisende Monomere. Besonders vorteilhaft sind dabei die Di-Ester zweiwertiger Alkohole mit α,β-monoethylenisch ungesättigten Monocarbonsäuren unter denen die Acryl- und Methacrylsäure bevorzugt sind. Beispiele für derartige zwei nicht konjugierte ethylenisch ungesättigte Doppelbindungen aufweisende Monomere sind Alkylenglykoldiacrylate und -dimethacrylate, wie Ethylenglykoldiacrylat, 1,2-Propylenglykoldiacrylat, 1,3-Propyfenglykoldiacrylat, 1,3-Butylenglykoldiacrylat, 1,4-Butylenglykoldiacrylate und Ethylenglykoldimethacrylat, 1,2-Propylenglykoldimethacrylat, 1,3-Propylenglykoldimethacrylat, 1,3-Butylenglykoldimethacrylat, 1,4-Butylenglykoldimethacrylat sowie Divinylbenzol, Vinylmethacrylat, Vinylacrylat, Allylmethacrylat, Allylacrylat, Diallylmaleat, Diallylfumarat, Cyclopentadienylacrylat, Triallylcyanurat oder Triallylisocyanurat. Häufig werden die vorgenannten vernetzenden Monomeren B in Mengen von ≤ 10 Gew.-%, bevorzugt jedoch in Mengen von ≤ 5 Gew.-%, jeweils bezogen auf die Gesamtmenge an Monomeren B, eingesetzt. Häufig werden jedoch keinerlei derartige vernetzende Monomeren B eingesetzt.

Vorteilhaft werden als Monomere B solche Monomerenmischungen eingesetzt, welche zu

- 50 bis 100 Gew.-% Ester der Acryl- und/oder Methacrylsäure mit 1 bis 12 C-Atome aufweisenden Alkanolen und/oder Styrol, oder

- 50 bis 100 Gew.-% Styrol und Butadien, oder

- 50 bis 100 Gew.-% Vinylchlorid und/oder Vinylidenchlorid, oder

- 40 bis 100 Gew.-% Vinylacetat, Vinylpropionat und/oder Ethylen

enthalten.

Mit besonderem Vorteil sind die Monomeren B ausgewählt aus der Gruppe umfassend Methylacrylat, Ethylacrylat, n-Butylacrylat, tert.-Butylacrylat, 2-Ethylhexylacrylat, 2-Propylheptylacrylat, Methylmethacrylat, Ethylmethacrylat, n-Butylmethacrylat, tert.-Butylmethacrylat, 2-Ethylhexylmethacrylat, 2-Propylheptylmethacrylat, Styrol, Vinyltoluol, 2-Methylstyrol, 4-Methylstyrol, 2-n-Butylstyrol, 4-n-Butylstyrol, 4-n-Decylstyrol, Vinylacetat, Vinylpropionat, Acrylnitril und Methacrylnitril.

Zur Herstellung der erfindungsgemäß verwendeten wässrigen Polymerisatdispersion werden 0,1 bis 10 Gew.-%, vorteilhaft 1 bis 8 Gew.-% und insbesondere vorteilhaft 2 bis 6 Gew.-% wenigstens eines Monomeren A und dementsprechend 90 bis 99,9 Gew.-%, vorteilhaft 92 bis 99 Gew.-% und insbesondere vorteilhaft 94 bis 98 Gew.-% wenigstens eines Monomeren B eingesetzt.

Zur Herstellung der erfindungsgemäß verwendeten wässrigen Polymerisatdispersion werden Dispergiermittel mitverwendet, die sowohl die Monomerentröpfchen, wie auch die gebildeten Polymerisatteilchen im wässrigen Medium dispers verteilt halten und so die Stabilität der erzeugten wässrigen Polymerisatdispersion gewährleisten. Als Dispergiermittel kommen sowohl die zur Durchführung von radikalischen wässrigen Emulsionspolymerisationen üblicherweise eingesetzten Schutzkolloide als auch Emulgatoren in Betracht.

Geeignete Schutzkolloide sind beispielsweise Polyvinylalkohole, Polyalkylenglykole, Alkalimetallsalze von Polyacrylsäuren und Polymethacrylsäuren, Gelatinederivate oder Acrylsäure, Methacrylsäure, Maleinsäureanhydrid, 2-Acrylamido-2-methylpropansulfonsäure und/oder 4-Styrolsulfonsäure enthaltende Copolymerisate und deren Alkalimetallsalze aber auch N-Vinylpyrrolidon, N-Vinylcaprolactam, N-Vinylcarbazol, 1-Vinylimidazol, 2-Vinylimidazol, 2-Vinylpyridin, 4-Vinylpyridin, Acrylamid, Methacrylamid, amingruppentragende Acrylate, Methacrylate, Acrylamide und/oder Methacrylamide enthaltende Homo- und Copolymerisate. Eine ausführliche Beschreibung weiterer geeigneter Schutzkolloide findet sich in Houben-Weyl, Methoden der organischen Chemie, Band XIV/1, Makromolekulare Stoffe, Georg-Thieme-Verlag, Stuttgart, 1961, Seiten 411 bis 420.

Selbstverständlich können auch Gemische aus Schutzkolloiden und/oder Emulgatoren eingesetzt werden. Häufig werden als Dispergiermittel ausschließlich Emulgatoren eingesetzt, deren relative Molekulargewichte im Unterschied zu den Schutzkolloiden üblicherweise unter 1000 liegen. Sie können sowohl anionischer, kationischer oder nichtionischer Natur sein. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Im allgemeinen sind anionische Emulgatoren untereinander und mit nichtionischen Emulgatoren verträglich. Desgleichen gilt auch für kationische Emulgatoren, während anionische und kationische Emulgatoren meistens nicht miteinander verträglich sind. Eine Übersicht geeigneter Emulgatoren findet sich in Houben-Weyl, Methoden der organischen Chemie, Band XIV/1, Makromolekulare Stoffe, Georg-Thieme-Verlag, Stuttgart, 1961, Seiten 192 bis 208.

Vorteilhaft werden als Dispergiermittel jedoch insbesondere Emulgatoren eingesetzt.

Gebräuchliche nichtionische Emulgatoren sind z.B. ethoxylierte Mono-, Di- und Tri-Alkylphenole (EO-Grad: 3 bis 50, Alkylrest: $C_4$ bis $C_{12}$) sowie ethoxylierte Fettalkohole (EO-Grad: 3 bis 80; Alkylrest: $C_8$ bis $C_{36}$). Beispiele hierfür sind die Lutensol® A-Marken ($C_{12}C_{14}$-Fettalkoholethoxylate, EO-Grad: 3 bis 8), Lutensol® AO-Marken ($C_{13}C_{15}$-Oxoalkoholethoxylate, EO-Grad: 3 bis 30), Lutensol® AT-Marken ($C_{16}C_{18}$-Fettalkoholethoxylate, EO-Grad: 11 bis 80), Lutensol® ON-Marken ($C_{10}$-Oxoalkoholethoxylate, EO-Grad: 3 bis 11) und die Lutensol® TO-Marken ($C_{13}$-Oxoalkoholethoxylate, EO-Grad: 3 bis 20) der Fa. BASF AG.

Übliche anionische Emulgatoren sind z. B. Alkalimetall- und Ammoniumsalze von Alkylsulfaten (Alkylrest: $C_8$ bis $C_{12}$), von Schwefelsäurehalbestern ethoxylierter Alkanole (EO-Grad: 4 bis 30, Alkylrest: $C_{12}$ bis $C_{18}$) und ethoxylierter Alkylphenole (EO-Grad: 3 bis 50, Alkylrest: $C_4$ bis $C_{12}$), von Alkylsulfonsäuren (Alkylrest: $C_{12}$ bis $C_{18}$) und von Alkylarylsulfonsäuren (Alkylrest: $C_9$ bis $C_{18}$).

Als weitere anionische Emulgatoren haben sich ferner Verbindungen der allgemeinen Formel (I)

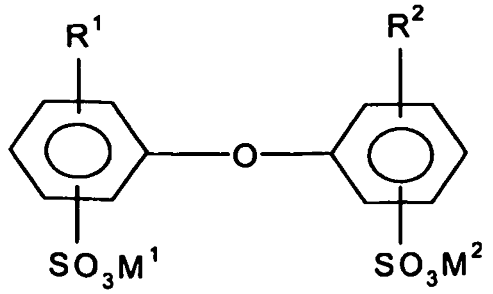

(I) ,

worin $R^1$ und $R^2$ H-Atome oder $C_4$- bis $C_{24}$-Alkyl bedeuten und nicht gleichzeitig H-Atome sind, und $M^1$ und $M^2$ Alkalimetallionen und/oder Ammoniumionen sein können, als geeignet erwiesen. In der allgemeinen Formel (I) bedeuten $R^1$ und $R^2$ bevorzugt lineare oder verzweigte Alkylreste mit 6 bis 18 C-Atomen, insbesondere mit 6, 12 und 16 C-Atomen oder Wasserstoff, wobei $R^1$ und $R^2$ nicht beide gleichzeitig H-Atome sind. $M^1$ und $M^2$ sind bevorzugt Natrium, Kalium oder Ammonium, wobei Natrium besonders bevorzugt ist. Besonders vorteilhaft sind Verbindungen (I), in denen $M^1$ und $M^2$ Natrium, $R^1$ ein verzweigter Alkylrest mit 12 C-Atomen und $R^2$ ein H-Atom oder $R^1$ ist. Häufig werden technische Gemische verwendet, die einen Anteil von 50 bis 90 Gew.-% des monoalkylierten Produktes aufweisen, wie beispielsweise Dowfax® 2A1 (Marke der Dow Chemical Company). Die Verbindungen (I) sind allgemein bekannt, z. B. aus US-A 4269749, und im Handel erhältlich.

Geeignete kationenaktive Emulgatoren sind in der Regel einen $C_6$- bis $C_{18}$-Alkyl-, - Alkylaryl- oder heterocyclischen Rest aufweisende primäre, sekundäre, tertiäre oder quartäre Ammoniumsalze, Alkanolammoniumsalze, Pyridiniumsalze, Imidazoliniumsalze, Oxazoliniumsalze, Morpholiniumsalze, Thiazoliniumsalze sowie Salze von Aminoxiden, Chinoliniumsalze, Isochinoliniumsalze, Tropyliumsalze, Sulfoniumsalze und Phosphoniumsalze. Beispielhaft genannt seien Dodecylammoniumacetat oder das entsprechende Sulfat, die Sulfate oder Acetate der verschiedenen 2-(N,N,N-Trimethylammonium)ethylparaffinsäureester, N-Cetylpyridiniumsulfat, N-Laurylpyridiniumsulfat sowie N-Cetyl-N,N,N-trimethylammoniumsulfat, N-Dodecyl-N,N,N-trimethylammoniumsulfat, N-Octyl-N,N,N-trimethlyammoniumsulfat, N,N-Distearyl-N,N-dimethylammoniumsulfat sowie das Gemini-Tensid N,N'-(Lauryldimethyl)ethylendiamindisulfat, ethoxyliertes Talgfettalkyl-N-methylammoniumsulfat und ethoxyliertes Oleylamin (beispielsweise Uniperol® AC der Fa. BASF AG, ca. 12 Ethylenoxideinheiten). Zahlreiche weitere Beispiele finden sich in H. Stache, Tensid-Taschenbuch, Carl-Hanser-Verlag, München, Wien, 1981 und in McCutcheon's, Emulsifiers & Detergents, MC Publishing Company, Glen Rock, 1989. Günstig ist, wenn die anionischen Gegengruppen möglichst gering nucleophil sind, wie beispielsweise Perchlorat, Sulfat, Phosphat, Nitrat und Carboxylate, wie beispielsweise Acetat, Trifluoracetat, Trichloracetat, Propionat, Oxalat, Citrat, Benzoat, sowie konjugierte Anionen von Organosulfonsäuren, wie zum Beispiel Methylsulfonat, Trifluormethylsulfonat und para-Toluolsulfonat, weiterhin Tetrafluoroborat, Tetraphenylborat, Tetrakis(pentafluorophenyl) borat, Tetrakis[bis(3,5-trifluormethyl)phenyl]borat, Hexafluorophosphat, Hexafluoroarsenat oder Hexafluoroantimonat.

Die als Dispergiermittel bevorzugt eingesetzten Emulgatoren werden vorteilhaft in einer Gesamtmenge ≥ 0,1 und ≤ 10 Gew.-%, vorzugsweise ≥ 0,1 und ≤ 5 Gew.-%, insbesondere ≥ 0,5 und ≤ 4 Gew.-%, jeweils bezogen auf die Gesamtmonomerenmenge, eingesetzt.

Die Gesamtmenge der als Dispergiermittel zusätzlich oder statt der Emulgatoren eingesetzten Schutzkolloide beträgt oft ≥ 0,1 und ≤ 10 Gew.-% und häufig ≥ 0,2 und ≤ 7 Gew.-%, jeweils bezogen auf die Gesamtmonomerenmenge.

Bevorzugt werden jedoch anionische und/oder nichtionische Emulgatoren und insbesondere bevorzugt anionische Emulgatoren als Dispergiermittel eingesetzt.

Zur Herstellung der erfindungsgemäß verwendeten wässrigen Polymerisatdispersion wird wenigstens eine Teilmenge der Dispergiermittel im wässrigen Polymerisationsmedium gemeinsam mit der Teilmenge der Monomeren B in Polymerisationsstufe 1 vorgelegt und die gegebenenfalls verbliebene Restmenge dem wässrigen Polymerisationsmedium in Polymerisationsstufe 2 diskontinuierlich in einer oder mehreren Portionen oder kontinuierlich mit gleichbleibenden oder sich ändernden Mengenströmen, insbesondere als Bestandteil einer wässrigen Monomerenemulsion, enthaltend die Gesamtmenge der Monomeren A und die Restmengen der Monomeren B, zudosiert. Dabei wird in Polymerisationsstufe 1 die Menge an Dispergiermittel, insbesondere der Emulgatoren so gewählt, dass sie ≥ 2 mmol, bevorzugt ≥ 5 mmol und insbesondere bevorzugt ≥ 10mmol pro 10 g Monomere B beträgt.

Die Auslösung der radikalisch initiierten wässrigen Emulsionspolymerisation erfolgt mittels eines radikalischen Polymerisationsinitiators (Radikalinitiator). Es kann sich dabei prinzipiell sowohl um Peroxide als auch um Azoverbindungen handeln. Selbstverständlich kommen auch Redoxinitiatorsysteme in Betracht. Als Peroxide können prinzipiell anorganische Peroxide, wie Wasserstoffperoxid oder Peroxodisulfate, wie die Mono- oder Di-Alkalimetall- oder Ammoniumsalze der Peroxodischwefelsäure, wie beispielsweise deren Mono- und Di-Natrium-, -Kalium- oder Ammoniumsalze oder organische Peroxide, wie Alkylhydroperoxide, beispielsweise tert.-Butyl-, p-Mentyl- oder Cumylhydroperoxid, sowie Dialkyl- oder Diarylperoxide, wie Di-tert.-Butyl- oder DiCumylperoxid eingesetzt werden. Als Azoverbindung finden im

wesentlichen 2,2'-Azobis(isobutyronitril), 2,2'-Azobis(2,4-dimethylvaleronitril) und 2,2'-Azobis(amidinopropyl)dihydrochlorid (AIBA, entspricht V-50 von Wako Chemicals) Verwendung. Als Oxidationsmittel für Redoxinitiatorsysteme kommen im wesentlichen die oben genannten Peroxide in Betracht. Als entsprechende Reduktionsmittel können Schwefelverbindungen mit niedriger Oxidationsstufe, wie Alkalisulfite, beispielsweise Kalium- und/oder Natriumsulfit, Alkalihydrogensulfite, beispielsweise Kalium- und/oder Natriumhydrogensulfit, Alkalimetabisulfite, beispielsweise Kalium- und/oder Natriummetabisulfit, Formaldehydsulfoxylate, beispielsweise Kalium- und/oder Natriumformaldehydsulfoxylat, Alkalisalze, speziell Kalium- und/oder Natriumsalze aliphatische Sulfinsäuren und Alkalimetallhydrogensulfide, wie beispielsweise Kalium- und/oder Natriumhydrogensulfid, Salze mehrwertiger Metalle, wie Eisen-(II)-sulfat, Eisen-(II)-Ammoniumsulfat, Eisen-(II)-phosphat, Endiole, wie Dihydroxymaleinsäure, Benzoin und/oder Ascorbinsäure sowie reduzierende Saccharide, wie Sorbose, Glucose, Fructose und/oder Dihydroxyaceton eingesetzt werden. In der Regel beträgt die Menge des eingesetzten Radikalinitiators, bezogen auf die Gesamtmonomerenmenge, 0,01 bis 5 Gew.-%, bevorzugt 0,1 bis 3 Gew.-% und insbesondere bevorzugt 0,2 bis 1,5 Gew.-%. Erfindungsgemäß kann die Gesamtmenge des Radikalinitiators im wässrigen Polymerisationsmedium vor Initiierung der Polymerisationsreaktion in Polymerisationsstufe 1 vorgelegt werden. Es ist aber auch möglich, gegebenenfalls lediglich eine Teilmenge des Radikalinitiators im wässrigen Polymerisationsmedium vor Initiierung der Polymerisationsreaktion in Polymerisationsstufe 1 vorzulegen und dann unter Polymerisationsbedingungen während der erfindungsgemäßen radikalischen Emulsionspolymerisation in Polymerisationsstufe 1 und Polymerisationsstufe 2 die Gesamtmenge bzw. die gegebenenfalls verbliebene Restmenge nach Maßgabe des Verbrauchs diskontinuierlich in einer oder mehreren Portionen oder kontinuierlich mit gleichbleibenden oder sich ändernden Mengenströmen zuzugeben.

Unter Initiierung der Polymerisationsreaktion wird der Start der Polymerisationsreaktion der im wässrigen Polymerisationsmedium vorliegenden Monomeren nach Radikalbildung des Radikalinitiators verstanden. Dabei kann die Initiierung der Polymerisationsreaktion durch Zugabe von Radikalinitiator zum wässrigen Polymerisationsmedium im Polymerisationsgefäß unter Polymerisationsbedingungen erfolgen. Es ist aber auch möglich, dass eine Teil- oder die Gesamtmenge des Radikalinitiators dem die vorgelegten Monomeren B enthaltenden wässrigen Polymerisationsmedium im Polymerisationsgefäß in Polymerisationsstufe 1 unter Bedingungen, welche nicht geeignet sind eine Polymerisationsreaktion auszulösen, beispielsweise bei tiefer Temperatur, zugegeben werden und danach im wässrigen Polymerisationsmedium Polymerisationsbedingungen eingestellt werden. Unter Polymerisationsbedingungen sind dabei generell diejenigen Temperaturen und Drücke zu verstehen, unter denen die radikalisch initiierte wässrige Emulsionspolymerisation mit ausreichender Polymerisationsgeschwindigkeit verläuft. Sie sind insbesondere abhängig vom verwendeten Radikalinitiator. Vorteilhaft werden Art und Menge des Radikalinitiators, Polymerisationstemperatur und Polymerisationsdruck so ausgewählt, dass immer genügend Startradikale zur Verfügung stehen, um die Polymerisationsreaktion zu initiieren bzw. aufrechtzuerhalten.

Als Reaktionstemperatur für die radikalische wässrige Emulsionspolymerisation kommt der gesamte Bereich von 0 bis 170 °C in Betracht. Dabei werden in der Regel Temperaturen von 50 bis 120 °C, häufig 60 bis 110 °C und oft 70 bis 100 °C angewendet. Die radikalische wässrige Emulsionspolymerisation kann bei einem Druck kleiner, gleich oder größer 1 atm (Atmosphärendruck) durchgeführt werden, so dass die Polymerisationstemperatur 100 °C übersteigen und bis zu 170 °C betragen kann. Vorzugsweise werden leichtflüchtige Monomere, wie beispielsweise Ethylen, Butadien oder Vinylchlorid unter erhöhtem Druck polymerisiert. Dabei kann der Druck 1,2, 1,5, 2, 5, 10, 15 bar (absolut) oder noch höhere Werte einnehmen. Werden Emulsionspolymerisationen im Unterdruck durchgeführt, werden Drücke von 950 mbar, häufig von 900 mbar und oft 850 mbar (absolut) eingestellt. Vorteilhaft wird die radikalische wässrige Emulsionspolymerisation bei 1 atm unter Sauerstoffausschluß, beispielsweise unter Inertgasatmosphäre, wie beispielsweise unter Stickstoff oder Argon durchgeführt.

Das wässrige Reaktionsmedium kann prinzipiell auch in untergeordneten Mengen (≤ 5 Gew.-%) wasserlösliche organische Lösungsmittel, wie beispielsweise Methanol, Ethanol, Isopropanol, Butanole, Pentanole, aber auch Aceton etc. umfassen. Bevorzugt wird die radikalische wässrige Emulsionspolymerisation jedoch in Abwesenheit solcher Lösungsmittel durchgeführt.

Neben den vorgenannten Komponenten können bei der radikalischen wässrigen Emulsionspolymerisation optional auch radikalkettenübertragende Verbindungen eingesetzt werden, um das Molekulargewicht der durch die Polymerisation zugänglichen Polymerisate zu reduzieren bzw. zu kontrollieren. Dabei kommen im wesentlichen aliphatische und/oder araliphatische Halogenverbindungen, wie beispielsweise n-Butylchlorid, n-Butylbromid, n-Butyljodid, Methylenchlorid, Ethylendichlorid, Chloroform, Bromoform, Bromtrichlormethan, Dibromdichlormethan, Tetrachlorkohlenstoff, Tetrabromkohlenstoff, Benzylchlorid, Benzylbromid, organische Thioverbindungen, wie primäre, sekundäre oder tertiäre aliphatische Thiole, wie beispielsweise Ethanthiol, n-Propanthiol, 2-Propanthiol, n-Butanthiol, 2-Butanthiol, 2-Methyl-2-propanthiol, n-Pentanthiol, 2-Pentanthiol, 3-Pentanthiol, 2-Methyl-2-butanthiol, 3-Methyl-2-butanthiol, n-Hexanthiol, 2-Hexanthiol, 3-Hexanthiol, 2-Methyl-2-pentanthiol, 3-Methyl-2-pentanthiol, 4-Methyl-2-pentanthiol, 2-Methyl-3-pentanthiol, 3-Methyl-3-pentanthiol, 2-Ethylbutanthiol, 2-Ethyl-2-butanthiol, n-Heptanthiol und seine isomeren Verbindungen, n-Octanthiol und seine isomeren Verbindungen, n-Nonanthiol und seine isomeren Verbindungen, n-Decanthiol und seine isomeren Verbindungen, n-Undecanthiol und seine isomeren Verbindungen, n-Dodecanthiol und seine isomeren Verbindungen, n-Tridecanthiol und seine isomeren Verbindungen, substituierte Thiole, wie beispielsweise 2-Hydroxyethanthiol, aromatische Thiole, wie Benzolthiol, ortho-, meta-, oder para-Methylbenzolthiol, sowie alle weiteren im Polymerhandbook 3rd edtition, 1989, J. Brandrup und E.H. Immergut, John Wiley & Sons, Abschnitt II, Seiten 133 bis 141, beschriebenen Schwefelverbindungen, aber auch aliphatische und/oder aromatische Aldehyde, wie Acetaldeyhd, Propionaldehyd und/oder Benzaldehyd, ungesättigte Fettsäuren, wie Ölsäure, Diene mit nicht konjugierten Doppelbindungen, wie Divinylmethan oder Vinylcyclohexan oder Kohlenwasserstoffe mit leicht abstrahierbaren Wasserstoffatomen, wie beispielsweise Toluol, zum Einsatz. Es ist aber auch möglich, Gemische sich nicht störender vorgenannter radikalkettenübertragender Verbindungen einzusetzen.

Die bei der radikalischen wässrigen Emulsionspolymerisation optional eingesetzte Gesamtmenge der radikalkettenübertragenden Verbindungen, bezogen auf die Gesamtmonomerenmenge, ist in der Regel ≤ 5 Gew.-%, oft ≤ 3 Gew.-% und häufig ≤ 1 Gew.-%.

Häufig ist es günstig, wenn eine Teil- oder die Gesamtmenge der optional eingesetzten radikalkettenübertragenden Verbindung dem wässrigen Polymerisationsmedium vor der Initiierung der radikalischen Emulsionspolymerisation in Polymerisationsstufe 1 zugeführt wird. Insbesondere günstig ist es jedoch, wenn eine Teil- oder die Gesamtmenge der optional eingesetzten radikalkettenübertragenden Verbindung dem wässrigen Polymerisationsmedium gemeinsam mit den Monomeren A und Monomeren B in der Polymerisationsstufe 2 zugeführt wird.

Erfindungswesentlich ist, dass im wässrigen Polymerisationsmedium in Polymerisationsstufe 1 zuerst lediglich 0,1 bis 10 Gew.-%, vorteilhaft ≥ 1 und ≥ 8 Gew.-% und insbesondere vorteilhaft ≥ 2 und ≥ 6 Gew.-% der Gesamtmenge des wenigstens einen Monomeren B vorgelegt und polymerisiert werden und daran anschließend in Polymerisationsstufe 2 die Gesamtmenge des wenigstens einen Monomeren A sowie die Restmenge des wenigstens einen Monomeren B dem wässrigen Polymerisationsmedium unter Polymerisationsbedingungen zugegeben und polymerisiert werden.

Dabei kann die Dosierung der Gesamtmenge der Monomeren A und der Restmenge der Monomeren B in Polymerisationsstufe 2 diskontinuierlich in einer oder mehreren Portionen oder kontinuierlich mit gleichbleibenden oder sich ändernden Mengenströmen erfolgen. Bevorzugt erfolgt die Dosierung der Monomeren A und B kontinuierlich mit gleichbleibenden Mengenströmen. Auch kann die Gesamtmenge der Monomeren A und die Restmenge der Monomeren B in separaten Einzelströmen oder als Monomerengemisch dosiert werden. Bevorzugt erfolgt die Dosierung der Gesamtmenge der Monomeren A und der Restmenge der Monomeren B als Monomerengemisch, insbesondere vorteilhaft in Form einer wässrigen Monomerenemulsion. Wesentlich ist, dass erfindungsgemäß auch Verfahrensvarianten umfasst sein sollen, bei denen sich in Polymerisationsstufe 2 die Zusammensetzungen der jeweiligen Monomeren A und/oder Monomeren B ändern, beispielsweise in einer dem Fachmann geläufigen Gradienten - oder Stufenfahrweise. Mit Vorteil erfolgt die Zugabe der Monomeren A und/oder der Monomeren B in Polymerisationsstufe 2 häufig nach der Gradienten- oder der Stufenfahrweise und insbesondere vorteilhaft nach der Stufenfahrweise.

Mit besonderem Vorteil erfolgt die radikalische wässrige Emulsionspolymerisation dergestalt, dass die Monomeren B in Polymerisationsstufe 1 bzw. die Monomeren A und B in Polymerisationsstufe 2 bis zu einem Umsatz von ≥ 95 Gew.-%, vorteilhaft ≥ 98 Gew.-% und insbesondere vorteilhaft ≥ 99 Gew.-% umgesetzt werden. Häufig ist es vorteilhaft, wenn die nach Abschluss der Polymerisationsstufe 2 erhaltene wässrige Polymerisatdispersion einer Nachbehandlung zur Reduzierung des Restmonomerengehalts unterzogen wird. Dabei erfolgt die Nachbehandlung entweder chemisch, beispielsweise durch Vervollständigung der Polymerisationsreaktion durch Einsatz eines effektiveren Radikalinitiatorensystems (sogenannte Nachpolymerisation) und/oder physikalisch, beispielsweise durch Strippung der wässrigen Polymerisatdispersion mit Wasserdampf oder Inertgas.

Entsprechende chemische und/oder physikalische Methoden sind dem Fachmann geläufig [siehe beispielsweise EP-A 771 328, DE-A 196 24 299, DE-A 196 21 027, DE-A 197 41 184, DE-A 197 41 187, DE-A 198 05 122, DE-A 198 28 183, DE-A 198 39 199, DE-A 198 40 586 und 198 47 115]. Dabei bietet die Kombination aus chemischer und physikalischer Nachbehandlung den Vorteil, dass neben den nicht umgesetzten ethylenisch ungesättigten Monomeren, auch noch andere störende leichtflüchtige organischen Bestandteile (die sogenannten VOCs [volatile organic compounds]) aus der wässrigen Polymerisatdispersion entfernt werden.

Durch gezielte Variation von Art und Menge der Monomeren A und B ist es dem Fachmann erfindungsgemäß möglich, wässrige Polymerisatdispersionen herzustellen, deren Polymerisate eine Glasübergangstemperatur bzw. einen Schmelzpunkt im Bereich von -60 bis 270 °C aufweisen. Selbstverständlich können auch Stufen- oder Mehrphasenpolymerisate mit mehreren Glasübergangstemperaturen hergestellt werden. Abhängig vom geplanten Einsatzzweck der wässrigen Polymerisatdispersionen werden Polymerisate hergestellt, welche wenigstens eine Polymerphase aufweisen, deren Glasübergangstemperatur ≥ -60 und ≤ 10 °C (Klebstoffe), ≥ 10 und ≤ 100 °C (Bindemittel für Beschichtungsformulierungen) oder ≥ 80 °C (harte Lackfilme) beträgt.

Mit der Glasübergangstemperatur $T_g$, ist der Grenzwert der Glasübergangstemperatur gemeint, dem diese gemäß G. Kanig (Kolloid-Zeitschrift & Zeitschrift für Polymere, Bd. 190, S. 1, Gleichung 1) mit zunehmendem Molekulargewicht zustrebt. Die Glasübergangstemperatur bzw. der Schmelzpunkt wird nach dem DSC-Verfahren ermittelt (Differential Scanning Calorimetry, 20 K/min, midpoint-Messung, DIN 53765).

Nach Fox (T.G. Fox, Bull. Am. Phys. Soc. 1956 [Ser. II] 1, Seite 123 und gemäß Ullmann's Encyclopädie der

technischen Chemie, Bd. 19, Seite 18, 4. Auflage, Verlag Chemie, Weinheim, 1980) gilt für die Glasübergangstemperatur von höchstens schwach vernetzten Mischpolymerisaten in guter Näherung:

$$1/T_g = x^1/T_g^1 + x^2/T_g^2 + .... x^n/T_g^n,$$

wobei $x^1$, $x^2$, .... $x^n$ die Massenbrüche der Monomeren 1, 2, .... n und $T_g^1$, $T_g^2$, .... $T_g^n$ die Glasübergangstemperaturen der jeweils nur aus einem der Monomeren 1, 2, .... n aufgebauten Polymerisaten in Grad Kelvin bedeuten. Die $T_g$-Werte für die Homopolymerisate der meisten Monomeren sind bekannt und z.B. in Ullmann's Ecyclopedia of Industrial Chemistry, Bd. 5, Vol. A21, Seite 169, VCH Weinheim, 1992, aufgeführt; weitere Quellen für Glasübergangstemperaturen von Homopolymerisaten bilden z.B. J. Brandrup, E.H. Immergut, Polymer Handbook, 1st Ed., J. Wiley, New York 1966, 2nd Ed. J.Wiley, New York 1975, und 3rd Ed. J. Wiley, New York 1989).

Die erfindungsgemäß verwendeten wässrigen Polymerisatdispersionen weisen üblicherweise Polymerfeststoffgehalte von ≥ 10 und ≤ 70 Gew.-%, häufig ≥ 20 und ≤ 65 Gew.-% und oft ≥ 40 und ≥ 60 Gew.-%, jeweils bezogen auf die wässrige Polymerzusammensetzung, auf.

Die erfindungsgemäß verwendeten wässrigen Polymerisatdispersionen weisen Polymerisatteilchen auf, die eine enge Teilchengrößenverteilung und gewichtsmittlere Durchmesser $D_w$ im Bereich ≥ 10 und ≤ 500 nm, bevorzugt ≥ 20 und ≤ 200 nm und insbesondere bevorzugt ≥ 30 nm bis ≤ 100 nm aufweisen. Die Bestimmung der gewichtsmittleren Teilchendurchmesser ist dem Fachmann bekannt und erfolgt beispielsweise über die Methode der Analytischen Ultrazentrifuge. Unter gewichtsmittlerem Teilchendurchmesser wird in dieser Schrift der nach der Methode der Analytischen Ultrazentrifuge ermittelte gewichtsmittlere $D_{w50}$-Wert verstanden (vgl. hierzu S.E. Harding et al., Analytical Ultracentrifugation in Biochemistry and Polymer Science, Royal Society of Chemistry, Cambridge, Great Britain 1992, Chapter 10, Analysis of Polymer Dispersions with an Eight-Cell-AUC-Multiplexer: High Resolution Particle Size Distribution and Density Gradient Techniques, W. Mächtle, Seiten 147 bis 175).

Unter enger Teilchengrößenverteilung soll im Rahmen dieser Schrift verstanden werden, wenn das Verhältnis der nach der Methode der Analytischen Ultrazentrifuge ermittelten gewichtsmittleren Teilchendurchmesser $D_{w50}$ und zahlenmittleren Teilchendurchmesser $D_{N50}$ [$D_{w50}/D_{N50}$] ≤2,0, bevorzugt ≤ 1,5 und insbesondere bevorzugt ≤ 1,2 oder ≤ 1,1 ist.

Die erfindungsgemäß verwendeten wässrigen Polymerisatdispersionen mit enger Teilchengrößenverteilungen und gewichtsmittleren Teilchendurchmessern $D_w$ ≤ 100 nm weisen eine überraschend hohe Transparenz auf und eignen sich daher insbesondere als Bindemittel in transparenten wässrigen Formulierungen für Holzbeschichtungen. Hierbei zeigen sich häufig Vorteile wie geringerer Bedarf an Verdickern zur Einstellung einer bestimmten Viskosität sowie gute und tiefe Einfärbung bei Verwendung von Farbpigmenten, gutes Eindringvermögen der Formulierung in die Holzoberfläche oder gute "Anfeuerung" der Holzmaserung. Außerdem weisen die erfindungsgemäß verwendeten wässrigen Polymerisatdispersionen eine verbesserte Filtrierbarkeit auf.

Die Erfindung soll anhand nachfolgender nicht einschränkender Beispiele erläutert werden.

Beispiele

a) Herstellung wässriger Polymerisatdispersionen

Beispiel 1 (B1)

In einem mit Dosiereinrichtungen und Temperaturregelung ausgerüstetem Polymerisationsgefäß wurden bei 20 bis 25 °C (Raumtemperatur) unter Stickstoffatmosphäre

| | |
|---|---|
| 307,0 g | entionisiertes Wasser und |
| 168,0 | g einer 15 gew.-%igen wässrigen Lösung von Natriumlaurylsulfat |

vorgelegt und unter Rühren auf 87 °C aufgeheizt. Bei Erreichung dieser Temperatur wurde 25 g Methylmethacrylat zugegeben und während einer halben Minute emulgiert. Anschließend wurde unter Aufrechterhaltung der Temperatur 2,9 g von Zulauf 3 zugegeben und 5 Minuten polymerisiert. Danach wurden zeitgleich beginnend Zulauf 1 innerhalb von 120 Minuten und parallel dazu die Restmenge von Zulauf 3 innerhalb von 165 Minuten mit gleichbleibenden Mengenströmen kontinuierlich zudosiert. Nach dem Ende von Zulauf 1 wurde Zulauf 2 innerhalb von 45 Minuten mit gleichbleibendem Mengenstrom kontinuierlich zudosiert.

Zulauf 1 (homogene Mischung aus):

| | |
|---|---|
| 578,4 g | entionisiertes Wasser |
| 34,0 g | einer 15 gew.-%igen wässrigen Lösung von Natriumlaurylsulfat |
| 492,0 g | n-Butylacrylat |
| 184,2 g | Methylmethacrylat |
| 8,4 g | einer 50 gew.-%igen wässrigen Lösung von Acrylamid |
| 7,5 g | Methacrylsäure und |
| 47,1 g | einer 25 gew.-%igen Lösung von Ureidomethacrylat in Methylmethacrylat[a)] |

Zulauf 2 (homogene Mischung aus):

| | |
|---|---|
| 118,3 g | entionisiertes Wasser |
| 12,0 g | einer 15 gew.-%igen wässrigen Lösung von Natriumlaurylsulfat |
| 6,8 g | Methacrylsäure |
| 30,1 g | einer 25 gew.-%igen Lösung von Ureidomethacrylat in Methylmethacrylat[a)] und |
| 203,1 g | Methylmethacrylat |

Zulauf 3 (homogene Lösung aus):

| | |
|---|---|
| 26,6 g | entionisiertem Wasser und |
| 2,0 g | Natriumperoxodisulfat |

a) Plex® 6844-O der Fa. Röhm GmbH

Nach Beendigung der Zuläufe 2 und 3 ließ man das Polymerisationsgemisch noch 30 Minuten bei 87 °C nachreagieren. Daran anschließend wurden dem Polymerisationsgemisch zeitgleich beginnend über separate Zulaufleitungen 16 g einer 5 gew.-%igen wässrigen Wasserstoffperoxid-Lösung und eine Lösung aus 1,4 g Ascorbinsäure und 67 g entionisiertem Wasser innerhalb von 60 Minuten mit gleichbleibenden Mengenströmen kontinuierlich zudosiert.

Anschließend wurde die erhaltene wässrige Polymerisatdispersion auf Raumtemperatur abgekühlt, mit 8,4 g einer 25 gew.-%igen wässrigen Ammoniaklösung neutralisiert und über ein 125 µm Filter filtriert.

Die erhaltene wässrige Polymerisatdispersion wies einen Feststoffgehalt von 42,2 Gew.-% auf. Der gewichtsmittlere Teilchendurchmesser der Polymerisatpartikel betrug 44 nm; die Polydispersität $D_{W50}/D_{N50}$ wurde zu 1,07 ermittelt. Die mit entionisiertem Wasser auf einen Feststoffgehalt von 40 Gew.-% verdünnte wässrige Polymerisatdispersion wies eine Lichtdurchlässigkeit von 26 % auf.

Der Feststoffgehalt wurde generell bestimmt, indem eine definierte Menge der wässrigen Polymerisatdispersion (ca. 1 g) in einem Aluminiumtiegel mit einem Innendurchmesser von ca. 5 cm bei 140 °C in einem Trockenschrank bis zur Gewichtskonstanz getrocknet wurde. Es wurden zwei separate Messungen durchgeführt. Die in den Beispielen angegebenen Werte stellen den Mittelwert der jeweiligen beiden Messergebnisse dar.

Die Bestimmung der gewichtsmittleren Teilchendurchmesser sowie der Polydispersität erfolgten generell nach der Methode der Analytischen Ultrazentrifuge(vgl. hierzu S.E. Harding et al., Analytical Ultracentrifugation in Biochemistry and Polymer Science, Royal Society of Chemistry, Cambridge, Great Britain 1992, Chapter 10, Analysis of Polymer Dispersions with an Eight-Cell-AUC-Multiplexer: High Resolution Particle Size Distribution and Density Gradient Techniques, W. Mächtle, Seiten 147 bis 175).

Die Lichtdurchlässigkeit wurde generell mittels einer mit entionisiertem Wasser auf einen Polymerisatfeststoffgehalt von 40 Gew.-% verdünnten Probe der wässrigen Polymerisatdispersion mittels eines Spektrophotometers DR/ 2010 der Fa. Hach, Deutschland bestimmt.

Vergleichsbeispiel 1 (V1)

Die Herstellung des Vergleichsbeispiels 1 erfolgte analog der Herstellung von Beispiel 1 mit dem Unterschied, dass die Menge an Wasser in der Vorlage 287,0 g anstelle von 307,0 g betrug, die Menge an Wasser in Zulauf 1 599,4 g anstelle von 578,4 g betrug, die Menge an Methylmethacrylat in Zulauf 1 209,2 g anstelle von 184,2 g betrug und 46 g von dem so erhaltenen Zulauf 1 anstelle von 25 g reinem Methylmethacrylat vorgelegt wurden.

Die erhaltene wässrige Polymerisatdispersion wies einen Feststoffgehalt von 42,3 Gew.-% auf. Der gewichtsmittlere Teilchendurchmesser der Polymerisatpartikel betrug 42 nm; die Polydispersität $D_{W50}/D_{N50}$ wurde zu 1,11 ermittelt. Die mit entionisiertem Wasser verdünnte wässrige Polymerisatdispersion wies eine Lichtdurchlässigkeit von 11 % auf.

Beispiel 2 (B2)

Die Herstellung von Beispiel 2 erfolgte analog dem Beispiel 1 mit dem Unterschied, dass

| | |
|---|---|
| 304,7 g | entionisiertes Wasser und |
| 50,0 g | einer 15 gew.-%igen wässrigen Lösung von Natriumlaurylsulfat |

vorgelegt und unter Rühren auf 87 °C aufgeheizt wurden und bei Erreichung dieser Temperatur 25 g Methylmethacrylat zugegeben und während einer halben Minute emulgiert wurden und als

Zulauf 1 (homogene Mischung aus):

| | |
|---|---|
| 736,3 g | entionisiertes Wasser |
| 46,0 g | einer 15 gew.-%igen wässrigen Lösung von Natriumlaurylsulfat |
| 8,2 g | einer 50 gew.-%igen wässrigen Lösung von Acrylamid |
| 14,6 g | Acrylsäure |
| 77,2 g | einer 25 gew.-%igen Lösung von Ureidomethacrylat in Methylmethacrylat |
| 471,2 g | Methylmethacrylat und |
| 407,9 g | 2-Ethylhexylacrylat |

innerhalb von 165 Minuten mit gleichbleibenden Mengenstrom kontinuierlich zudosiert wurden.

Die erhaltene wässrige Polymerisatdispersion wies einen Feststoffgehalt von 45,2 Gew.-% auf. Der gewichtsmittlere Teilchendurchmesser der Polymerisatpartikel betrug 57 nm; die Polydispersität $D_{W50}/D_{N50}$ wurde zu 1,09 ermittelt. Die mit entionisiertem Wasser verdünnte wässrige Polymerisatdispersion wies eine Lichtdurchlässigkeit von 12 % auf.

Vergleichsbeispiel 2 (V2)

Die Herstellung von Vergleichsbeispiel 2 erfolgte analog Beispiel 2 mit dem Unterschied, dass 42,5 g des Zulaufs 1 anstelle von 25 g Methylmethacrylat vorgelegt wurden und in Zulauf 1 496,2 g Methylmethacrylat eingesetzt wurden anstelle von 471,2 g.

Die erhaltene wässrige Polymerisatdispersion wies einen Feststoffgehalt von 45,2 Gew.-% auf. Der gewichtsmittlere Teilchendurchmesser der Polymerisatpartikel betrug 62 nm; die Polydispersität $D_{W50}/D_{N50}$ wurde zu 1,20 ermittelt. Die mit entionisiertem Wasser verdünnte wässrige Polymerisatdispersion wies eine Lichtdurchlässigkeit von lediglich 2 % auf.

Beispiel 3 (B3)

In einem mit Dosiereinrichtungen und Temperaturregelung ausgerüstetem Polymerisationsgefäß wurden bei Raumtemperatur und unter Stickstoffatmosphäre

| | |
|---|---|
| 593,0 g | entionisiertes Wasser und |
| 117,0 g | einer 15 gew.-%igen wässrigen Lösung von Natriumlaurylsulfat |

vorgelegt und unter Rühren auf 82 °C aufgeheizt. Bei Erreichung dieser Temperatur wurde 35 g n-Butylacrylat zugegeben und während einer halben Minute emulgiert. Anschließend wurde unter Aufrechterhaltung der Temperatur 40 g einer 7 gew.-%igen wässrigen Lösung von Natriumpersulfat zugegeben und 5 Minuten polymerisiert. Daran anschließend wurde Zulauf 1 innerhalb von 120 Minuten gleichbleibendem Mengenstrom kontinuierlich zudosiert. Nach dem Ende von Zulauf 1 wurde Zulauf 2 innerhalb von 45 Minuten mit gleichbleibendem Mengenstrom kontinuierlich zudosiert.

Zulauf 1 (homogene Mischung aus):

| | |
|---|---|
| 623,8 g | entionisiertes Wasser |
| 23,3 g | einer 15 gew.-%igen wässrigen Lösung von Natriumlaurylsulfat |

(fortgesetzt)

Zulauf 1 (homogene Mischung aus):

| | |
|---|---|
| 10,9 g | einer 50 gew.-%igen wässrigen Lösung von Acrylamid |
| 9,8 g | Methacrylsäure |
| 339,0 g | Methylmethacrylat und |
| 661,0 g | n-Butylacrylat |

und als

Zulauf 2 (homogene Mischung aus):

| | |
|---|---|
| 152,9 g | entionisiertes Wasser |
| 8,4 g | einer 15 gew.-%igen wässrigen Lösung von Natriumlaurylsulfat |
| 99,3 g | einer 50 gew.-%igen wässrigen Lösung von Acrylamid |
| 14,0 g | Methacrylsäure und |
| 332,0 g | Methylmethacrylat |

Nach Beendigung von Zulauf ließ man das Polymerisationsgemisch noch 30 Minuten bei 82 °C nachreagieren. Daran anschließend wurden dem Polymerisationsgemisch zeitgleich beginnend über separate Zulaufleitungen 22,4 g einer 5 gew.-%igen wässrigen Wasserstoffperoxid-Lösung und eine Lösung aus 2,0 g Ascorbinsäure und 93,8 g entionisiertem Wasser innerhalb von 60 Minuten mit gleichbleibenden Mengenströmen kontinuierlich zudosiert.

Anschließend wurde die erhaltene wässrige Polymerisatdispersion auf Raumtemperatur abgekühlt, mit 9,5 g einer 25 gew.-%igen wässrigen Ammoniaklösung neutralisiert und über ein 125 µm Filter filtriert.

Die erhaltene wässrige Polymerisatdispersion wies einen Feststoffgehalt von 43,1 Gew.-% auf. Der gewichtsmittlere Teilchendurchmesser der Polymerisatpartikel betrug 44 nm; die Polydispersität $D_{W50}/D_{N50}$ wurde zu 1,08 ermittelt. Die mit entionisiertem Wasser verdünnte wässrige Polymerisatdispersion wies eine Lichtdurchlässigkeit von 33 % auf.

Vergleichsbeispiel 3 (V3)

Die Herstellung des Vergleichsbeispiels 3 erfolgte analog der Herstellung von Beispiel 3 mit dem Unterschied, dass die Menge an Wasser in der Vorlage 570,6 g anstelle von 593,0 g betrug, die Menge an Wasser in Zulauf 1 646,2 g anstelle von 623,8. g betrug, die Menge an n-Butylacrylat in Zulauf 1 696,0 g anstelle von 661,0 g betrug und 57,5 g von dem so erhaltenen Zulauf 1 anstelle von 35 g reinem n-Butylacrylat vorgelegt wurden.

Die erhaltene wässrige Polymerisatdispersion wies einen Feststoffgehalt von 42,6 Gew.-% auf. Der gewichtsmittlere Teilchendurchmesser der Polymerisatpartikel betrug 45 nm; die Polydispersität $D_{W50}/D_{N50}$ wurde zu 1,12 ermittelt. Die mit entionisiertem Wasser verdünnte wässrige Polymerisatdispersion wies eine Lichtdurchlässigkeit von 15 % auf.

b) Anwendungstechnische Untersuchungen

Die wässrigen Polymerisatdispersionen wurden mit entionisiertem Wasser auf einen Feststoffgehalt von 37,5 Gew.-% verdünnt. Je 163 g dieser verdünnten wässrigen Polymerisatdispersionen wurden bei Raumtemperatur als Bindemittel zu einer Rohstreichlasurformulierung, bestehend aus

| | |
|---|---|
| 22,4 g | entionisiertem Wasser |
| 2,0 g | Mergal® S 96 (Fungizid der Fa. Troy Chemie GmbH) |
| 0,2 g | AMP® 90 (Neutralisationsmittel der Fa. Angus Chemical Company) |
| 0,2 g | Silikontensid® Byk 346 (Netzmittel der Fa. Byk-Chemie GmbH) |
| 0,4 g | Tego Foamex® 810 (Entschäumer der Fa. Tego Chemie Service GmbH) |
| 1,0 g | Coatex® BR 100 P (Verdicker der Fa. Cognis Deutschland GmbH & Co KG) |
| 6,0 g | Luconyl® Gelb flüssig (Pigment der Fa. BASF AG) |
| 5,0 g | Texanol® (Lösemittel der Fa. Eastman Deutschland) |

zugegeben und homogen gemischt.

Die erhaltenen Streichlasuren wurden bei Raumtemperatur mit einem Aufziehgerät mit 300 µm Spaltbreite homogen gleichmäßig auf eine Oberfläche unbehandelter 15 cm x 7 cm Kieferholzbrettchen (Dicke: 0,5 cm) aufgebracht, welche vorher geschliffen wurden. Die so erhaltenen lasierten Bretter wurden anschließend in einem Klimaraum bei 23 °C und 50 % relativer Luftfeuchtigkeit für 24 Stunden getrocknet. Die auf die Holzoberflächen aufgebrachten Streichlasuren wurden im feuchten und im getrockneten Zustand visuell hinsichtlich Farbtiefe und Farbbrillanz beurteilt. Dabei erfolgte die Beurteilung nach dem Schulnotensystem, wobei 1 für sehr gut, 2 für gut, 3 für befriedigend, 4 für ausreichend und 5 für ungenügend steht. Die bei den einzelnen Beurteilungen erhaltenen Ergebnisse sind in nachfolgender Tabelle aufgelistet:

| Beispiel | B1 | V1 | B2 | V2 | B3 | V3 |
|---|---|---|---|---|---|---|
| Farbtiefe feucht | 1-2 | 3-4 | 3 | 4-5 | 1 | 3 |
| Farbbrillanz feucht | 1-2 | 4 | 3-4 | 5 | 1 | 3 |
| Farbtiefe trocken | 1-2 | 2 | 1-2 | 2 | 1-2 | 1-2 |
| Farbbrillanz trocken | 1-2 | 2 | 2 | 2 | 1-2 | 2 |
| Kommentar (feuchter Auftrag) | farblos klar | Gelbstich milchig | farblos klar | Schlieren milchig | farblos klar | Gelbstich milchig |

Aus den Ergebnissen wird klar ersichtlich, dass die Farbtiefe und die Farbbrillanz der Farblasuren, welche unter Verwendung der erfindungsgemäßen wässrigen Polymerisatdispersionen hergestellt wurden, insbesondere im feuchten Zustand deutlich besser beurteilt wurden.

**Patentansprüche**

1. Verwendung einer wässrigen Polymerisatdispersion mit enger Teilchengrößenverteilung und gewichtsmittlerem Teilchendurchmesser ≤ 100 nm, wobei unter enger Teilchengrößenverteilung verstanden werden soll, wenn das Verhältnis der nach der Methode der Analytischen Ultrazentrifuge ermittelten gewichtsmittleren Teilchendurchmesser $D_{W50}$ und zahlenmittleren Teilchendurchmesser $D_{N50}$ ≤ 2,0 ist, hergestellt durch radikalisch initiierte wässrige Emulsionspolymerisation von ethylenisch ungesättigten Monomeren in Anwesenheit wenigstens eines Dispergiermittels und wenigstens eines Radikalinitiators, wobei zur Emulsionspolymerisation

    0,1 bis 10 Gew.-% wenigstens eines ethylenisch ungesättigten Monomeren mit einer Löslichkeit ≥ 200 g pro 1000 g entionisiertem Wasser bei 20 °C und 1 atm (absolut) [Monomer A], und
    90 bis 99,9 Gew.-% wenigstens eines ethylenisch ungesättigten Monomeren mit einer Löslichkeit ≤ 100 g pro 1000 g entionisiertem Wasser bei 20 °C und 1 atm (absolut) [Monomer B]

    eingesetzt werden und sich die Monomeren A und B zu 100 Gew.-% addieren, wobei in einem wässrigen Polymerisationsmedium zuerst lediglich

    0,1 bis 10 Gew.-% der Gesamtmenge des wenigstens einen Monomeren B vorgelegt und polymerisiert werden (Polymerisationsstufe 1)

    und daran anschließend die Gesamtmenge des wenigstens einen Monomeren A sowie die Restmenge des wenigstens einen Monomeren B dem wässrigen Polymerisationsmedium unter Polymerisationsbedingungen zugegeben und polymerisiert werden (Polymerisationsstufe 2), als Bindemittel in transparenten wässrigen Formulierungen für Holzbeschichtungen.

2. Verwendung nach Anspruch 1, wobei die Monomeren A und B in Polymerisationsstufe 2 kontinuierlich zudosiert werden.

**3.** Verwendung nach einem der Ansprüche 1 und 2, wobei die Monomeren A und B in Polymerisationsstufe 2 als Monomerengemisch zudosiert werden.

**4.** Verwendung nach einem der Ansprüche 1 bis 3, wobei in Polymerisationsstufe 1 ≥ 1 und ≤ 8 Gew.-% der Gesamtmenge des wenigstens einen Monomeren B vorgelegt und polymerisiert werden.

**5.** Verwendung nach einem der Ansprüche 1 bis 4, wobei in Polymerisationsstufe 1 die Dispergiermittelmenge ≥ 2 mmol pro 10 g Monomere B beträgt.

**6.** Verwendung nach einem der Ansprüche 1 bis 5, wobei die Monomeren A ausgewählt sind aus der Gruppe umfassend Acrylsäure, Methacrylsäure, 2-Acrylamido-2-methylpropansulfonsäure, Vinylsulfonsäure, Acrylamid, Methacrylamid, N-(2-Methacryloyloxyethyl)ethylenharnstoff, N-(2-Acryloyloxyethyl)ethylenharnstoff, 2-Acetoacetoxyethylacrylat, 2-Acetoacetoxyethylmethacrylat, Diacetonacrylamid, 2-Hydroxyethylacrylat, Hydroxypropylacrylat, 2-Hydroxyethylmethacrylat und Hydroxypropylmethacrylat.

**7.** Verwendung nach einem der Ansprüche 1 bis 6, wobei die Monomeren B ausgewählt sind aus der Gruppe umfassend Methylacrylat, Ethylacrylat, n-Butylacrylat, tert.-Butylacrylat, 2-Ethylhexylacrylat, 2-Propylheptylacrylat, Methylmethacrylat, Ethylmethacrylat, n-Butylmethacrylat, tert.-Butylmethacrylat, 2-Ethylhexylmethacrylat, 2-Propylheptylmethacrylat, Styrol, Vinyltoluol, 2-Methylstyrol, 4-Methylstyrol, 2-n-Butylstyrol, 4-n-Butylstyrol, 4-n-Decylstyrol, Vinylacetat, Vinylpropionat, Acrylnitril und Methacrylnitril.

**8.** Verwendung nach einem der Ansprüche 1 bis 7, wobei als Dispergiermittel Emulgatoren eingesetzt werden.

**9.** Verwendung nach einem der Ansprüche 1 bis 8, wobei als Dispergiermittel nichtionische und/oder anionische Emulgatoren eingesetzt werden.

**10.** Verwendung nach einem der Ansprüche 1 bis 9, wobei die Zugabe der Monomeren A und/oder der Monomeren B in Polymerisationsstufe 2 nach der Gradienten - oder der Stufenfahrweise erfolgt.

## Claims

**1.** The use of an aqueous polymer dispersion having a narrow particle size distribution and weight average particle diameter ≤ 100 nm, where narrow particle size distribution is to be understood as meaning when the ratio of the weight-average particle diameter $D_{W50}$ determined by the analytical ultracentrifuge method and the number average particle diameter $D_{N50}$ is ≤ 2.0, prepared by free radical aqueous emulsion polymerization of ethylenically unsaturated monomers in the presence of at least one dispersant and at least one initiator, by using

from 0.1 to 10% by weight of at least one ethylenically unsaturated monomer having a solubility of ≥ 200 g per 1000 g of demineralized water at 20°C and 1 atm (absolute) [monomer A], and
from 90 to 99.9% by weight of at least one ethylenically unsaturated monomer having a solubility of ≤ 100 g per 1000 g of demineralized water at 20°C and 1 atm (absolute) [monomer B]

for the emulsion polymerization, the monomers A and B summing to 100% by weight, by initially taking and polymerizing first only

from 0.1 to 10% by weight of the total amount of the at least one monomer B (polymerization stage 1)

in an aqueous polymerization medium and thereafter adding the total amount of the at least one monomer A and the remaining amount of the at least one monomer B to the aqueous polymerization medium under polymerization conditions and polymerizing them (polymerization stage 2), as a binder in transparent aqueous formulations for wood coatings.

**2.** The use according to claim 1, wherein the monomers A and B are metered in continuously in polymerization stage 2.

**3.** The use according to either of claims 1 and 2, wherein the monomers A and B are metered in as a monomer mixture in polymerization stage 2.

**4.** The use according to any of claims 1 to 3, wherein ≥ 1 and ≤ 8% by weight of the total amount of the at least one monomer B are initially taken and polymerized in polymerization stage 1.

**5.** The use according to any of claims 1 to 4, wherein the amount of dispersant is ≥ 2 mmol per 10 g of monomers B in polymerization stage 1.

**6.** The use according to any of claims 1 to 5, wherein the monomers A are selected from the group consisting of acrylic acid, methacrylic acid, 2-acrylamido-2-methylpropanesulfonic acid, vinylsulfonic acid, acrylamide, methacrylamide, N-(2-methacryloyloxyethyl)ethyleneurea, N-(2-acryloyloxyethyl)ethyleneurea, 2-acetoacetoxyethyl acrylate, 2-acetoacetoxyethyl methacrylate, diacetoneacrylamide, 2-hydroxyethyl acrylate, hydroxypropyl acrylate, 2-hydroxyethyl methacrylate and hydroxypropyl methacrylate.

**7.** The use according to any of claims 1 to 6, wherein the monomers B are selected from the group consisting of methyl acrylate, ethyl acrylate, n-butyl acrylate, tert-butyl acrylate, 2-ethylhexyl acrylate, 2-propylheptyl acrylate, methyl methacrylate, ethyl methacrylate, n-butyl methacrylate, tert-butyl methacrylate, 2-ethylhexyl methacrylate, 2-propylheptyl methacrylate, styrene, vinyltoluene, 2-methylstyrene, 4-methylstyrene, 2-n-butylstyrene, 4-n-butylstyrene, 4-n-decylstyrene, vinyl acetate, vinyl propionate, acrylonitrile and methacrylonitrile.

**8.** The use according to any of claims 1 to 7, wherein emulsifiers are used as dispersants.

**9.** The use according to any of claims 1 to 8, wherein nonionic and/or anionic emulsifiers are used as dispersants.

**10.** The use according to any of claims 1 to 9, wherein the addition of the monomers A and/or the monomers B in polymerization stage 2 is effected by the gradient or step procedure.

## Revendications

**1.** Utilisation d'une dispersion aqueuse de polymère ayant une distribution des tailles de particules étroite et un diamètre de particule moyen en poids ≤ 100 nm, une distribution des tailles de particules étroite devant être comprise en ce que le rapport entre le diamètre de particule moyen en poids $D_{W50}$ et le diamètre de particule moyen en nombre $D_{N50}$, calculés par la méthode d'ultracentrifugation analytique, est ≤ 2,0, fabriquée par polymérisation en émulsion aqueuse initiée radicalairement de monomères éthyléniquement insaturés en présence d'au moins un dispersant et d'au moins un initiateur radicalaire,

> 0,1 à 10 % en poids d'au moins un monomère éthyléniquement insaturé ayant une solubilité ≥ 200 g par 1 000 g d'eau déionisée à 20 °C et 1 atm (absolu) [monomère A], et
> 90 à 99,9 % en poids d'au moins un monomère éthyléniquement insaturé ayant une solubilité ≤ 100 g par 1 000 g d'eau déionisée à 20 °C et 1 atm (absolu) [monomère B]

étant utilisés pour la polymérisation en émulsion et les monomères A et B totalisant 100 % en poids, seulement

> 0,1 à 10 % en poids de la quantité totale du ou des monomères B étant tout d'abord chargés dans un milieu de polymérisation aqueux et polymérisés (étape de polymérisation 1),

puis la quantité totale du ou des monomères A et la quantité résiduelle du ou des monomères B étant ajoutées au milieu de polymérisation aqueux dans des conditions de polymérisation et polymérisées (étape de polymérisation 2), en tant que liant dans des formulations aqueuses transparentes pour revêtements de bois.

**2.** Utilisation selon la revendication 1, dans laquelle les monomères A et B sont introduits en continu à l'étape de polymérisation 2.

**3.** Utilisation selon l'une quelconque des revendications 1 et 2, dans laquelle les monomères A et B sont introduits sous la forme d'un mélange de monomères à l'étape de polymérisation 2.

**4.** Utilisation selon l'une quelconque des revendications 1 à 3, dans laquelle, à l'étape de polymérisation 1, ≥ 1 et ≤ 8 % en poids de la quantité totale du ou des monomères B sont chargés et polymérisés.

**5.** Utilisation selon l'une quelconque des revendications 1 à 4, dans laquelle, à l'étape de polymérisation 1, la quantité de dispersant est ≥ 2 mmol par 10 g de monomères B.

**6.** Utilisation selon l'une quelconque des revendications 1 à 5, dans laquelle les monomères A sont choisis dans le groupe comprenant l'acide acrylique, l'acide méthacrylique, l'acide 2-acrylamido-2-méthylpropanesulfonique, l'acide vinylsulfonique, l'acrylamide, le méthacrylamide, la N-(2-méthacryloyloxyéthyl)éthylène-urée, la N-(2-acryloyloxyéthyl)éthylène-urée, l'acrylate de 2-acétoacétoxyéthyle, le méthacrylate de 2-acétoacétoxyéthyle, le diacétone-acrylamide, l'acrylate de 2-hydroxyéthyle, l'acrylate d'hydroxypropyle, le méthacrylate de 2-hydroxyéthyle et le méthacrylate d'hydroxypropyle.

**7.** Utilisation selon l'une quelconque des revendications 1 à 6, dans laquelle les monomères B sont choisis dans le groupe comprenant l'acrylate de méthyle, l'acrylate d'éthyle, l'acrylate de n-butyle, l'acrylate de tert.-butyle, l'acrylate de 2-éthylhexyle, l'acrylate de 2-propylheptyle, le méthacrylate de méthyle, le méthacrylate d'éthyle, le méthacrylate de n-butyle, le méthacrylate de tert.-butyle, le méthacrylate de 2-éthylhexyle, le méthacrylate de 2-propylheptyle, le styrène, le vinyltoluène, le 2-méthylstyrène, le 4-méthylstyrène, le 2-n-butylstyrène, le 4-n-butylstyrène, le 4-n-décylstyrène, l'acétate de vinyle, le propionate de vinyle, l'acrylonitrile et le méthacrylonitrile.

**8.** Utilisation selon l'une quelconque des revendications 1 à 7, dans laquelle des émulsifiants sont utilisés en tant que dispersant.

**9.** Utilisation selon l'une quelconque des revendications 1 à 8, dans laquelle des émulsifiants non ioniques et/ou anioniques sont utilisés en tant que dispersant.

**10.** Utilisation selon l'une quelconque des revendications 1 à 9, dans laquelle l'ajout des monomères A et/ou des monomères B à l'étape de polymérisation 2 a lieu selon la procédure à gradients ou à étapes.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 4003422 A
- DE 19609509 A
- EP 690882 A
- EP 710680 A
- EP 1125949 A
- EP 1294816 A
- EP 1614732 A
- WO 0329300 A
- US 4269749 A
- EP 771328 A
- DE 19624299 A
- DE 19621027 A
- DE 19741184 A
- DE 19741187 A
- DE 19805122 A
- DE 19828183 A
- DE 19839199 A
- DE 19840586 A
- DE 19847115 A


### In der Beschreibung aufgeführte Nicht-Patentliteratur


- Emulsionspolymerisation in Encyclopedia of Polymer Science and Engineering. 1987, vol. 8, 659 ff
- **D.C. BLACKLEY.** *High Polymer Latices,* 1966, vol. 1, 35 ff
- **H. WARSON.** The Applications of Synthetic Resin Emulsions. 1972, 246 ff
- **D. DIEDERICH.** *Chemie in unserer Zeit,* 1990, vol. 24, 135-142
- Emulsion Polymerisation. Interscience Publishers, 1965
- **F. HÖLSCHER.** Dispersionen synthetischer Hochpolymerer. Springer-Verlag, 1969
- Methoden der organischen Chemie. **HOUBEN-WEYL.** Makromolekulare Stoffe. Georg-Thieme-Verlag, 1961, vol. XIV/1, 411-420
- Methoden der organischen Chemie. **HOUBEN-WEYL.** Makromolekulare Stoffe. Georg-Thieme-Verlag, 1961, vol. XIV/1, 192-2080000
- **H. STACHE.** Tensid-Taschenbuch. Carl-Hanser-Verlag, 1981
- McCutcheon's, Emulsifiers & Detergents. MC Publishing Company, 1989
- **J. BRANDRUP ; E.H. IMMERGUT.** Polymerhandbook. John Wiley & Sons, 1989, 133-141
- **T.G. FOX.** *Bull. Am. Phys. Soc.,* 1956, vol. 1, 123
- Ullmann's Encyclopädie der technischen Chemie. Verlag Chemie, 1980, vol. 19, 18
- Ullmann's Ecyclopedia of Industrial Chemistry. VCH, 1992, vol. 5, 169
- POLYMER HANDBOOK. J.Wiley, 1975
- POLYMER HANDBOOK. J. Wiley, 1989
- Analysis of Polymer Dispersions with an Eight-Cell-AUC-Multiplexer: High Resolution Particle Size Distribution and Density Gradient Techniques. **S.E. HARDING et al.** Analytical Ultracentrifugation in Biochemistry and Polymer Science. Royal Society of Chemistry, 1992, 147-175